# EUROPEAN PATENT APPLICATION

(11) **EP 2 357 621 A1**
(43) Date of publication of application: **17.08.2011**
(21) Application number: 11151776.9
(22) Date of filing: 22.01.2011
(51) Int. Cl.: G07F 7/10, G06Q 20/00

(54) **Systems and methods for managing accounts payable**

(30) Priority: 22.01.2010 US 297620 P; 21.01.2011 US 11536
(71) Applicant: Shakkarwar, Rajesh, Cupertino, CA 95014 (US)
(72) Inventor: Shakkarwar, Rajesh, Cupertino, CA 95014 (US)
(74) Representative: Dilg, Haeusler, Schindelmann Patentanwaltsgesellschaft mbH

(57) **Abstract**

A computer-implemented method for generating a first accounts payable financial product that is configured to be used for one or more payment transactions. The method includes receiving a selection of a core account for providing financial backing for the first accounts payable financial product; receiving a selection of a first recipient payee to which the first accounts payable financial product is to be distributed; generating the first accounts payable financial product based on one or more control parameters that define use restrictions for the first accounts payable financial product; and causing the first accounts payable financial product to be distributed to the first recipient payee.

## Description

### CROSS-REFERENCE TO RELATED APPLICATIONS

This application claims priority to United States provisional patent application titled, "SYSTEMS AND METHODS FOR MANAGING ACCOUNTS PAYABLE" filed on January 22, 2010 and having serial number 61/297,620 (Attorney Docket Number VERI/0011L), and United States patent application serial number 13/011,536, filed January 21, 2011. Each of these applications are hereby incorporated by reference herein.

### BACKGROUND

### Field of the Invention

The present invention relates generally to the field of payment processing and, more particularly, to systems and methods for managing accounts payable.

### Description of the Related Art

As is known, several methods of payment for goods or services exist today, including cash, check, credit card, and debit card. Some of the most popular methods of payment include payment by credit card and by debit card. When credit/debit cards were first introduced, there was no concept of online payments, online banking, or payments via mobile phone. Today, these forms of payment are also very common.

A credit/debit card system is one where an issuer, usually a financial institution, issues a credit/debit card to a customer. The customer may then pay for goods or services using the credit/debit card. Essentially, the issuer is lending money to the customer to pay for the good or services.

When payment for goods or services is initiated with a credit/debit card, the transaction details are sent to a card network for processing. Each credit/debit card has a unique prefix that allows for proper routing of the transaction to the proper card network and to the proper financial institution. When the transaction is received by the financial institution, the transaction is processed and either approved or denied based on well-defined criteria.

However, existing payment products, including credit/debit cards, are premised on legacy systems that are difficult to change. For example, many financial institution systems use older generation software and mainframe computers. The rigidity of this legacy infrastructure, along with the large amount of information technology resources spent on compliance and maintenance, do not allow financial institutions to keep pace with payment technology advancements and customer demands.

Accordingly, there exists a need in the art for a payment processing platform that allows financial institutions to offer more sophisticated payment processing approaches with minimal changes to their legacy systems.

### SUMMARY

One embodiment of the invention provides a computer-implemented method for generating a first accounts payable financial product that is configured to be used for one or more payment transactions. The method includes receiving a selection of a core account for providing financial backing for the first accounts payable financial product; receiving a selection of a first recipient payee to which the first accounts payable financial product is to be distributed; generating the first accounts payable financial product based on one or more control parameters that define use restrictions for the first accounts payable financial product; and causing the first accounts payable financial product to be distributed to the first recipient payee.

One advantage is that businesses are able to facilitate immediate payments between one another through accounts payable financial child products. Another advantage is that businesses are able to establish higher levels of security for payments to other businesses through the addition of control parameters to accounts payable financial child products. Yet another advantage is a reduction in error when performing account reconciliations. Accounts payable financial child products also significantly reduce the expenses related to physical check processing and postage associated with conventional accounts payable techniques. In one embodiment, a guaranteed good funds model involves a financial institution collecting funds prior to making a payment, thereby reducing risk of failed or fraudulent payments.

### BRIEF DESCRIPTION OF THE DRAWINGS

So that the manner in which the above recited features of the present invention are attained and can be understood in detail, a more particular description of the present invention, briefly summarized above, may be had by reference to the embodiments thereof which are illustrated in the appended drawings. It is to be noted, however, that the appended drawings illustrate only typical embodiments of the present invention and are therefore not to be considered limiting of its scope, for the present invention may admit to other equally effective embodiments.

Figure 1 is a block diagram illustrating components of a system configured to implement one or more aspects of the invention.

Figure 2 is a conceptual illustration of a system including a payment processing platform, according to one embodiment of the invention.

Figure 3A is a flow diagram of method steps for generating a child product, according to one embodiment of the invention.

Figure 3B is flow diagram of method steps for establishing trust between a financial institution and a payment processing platform, according to one embodiment of the invention.

Figure 4 is a screen shot illustrating selection of control parameters for a child product, according to one embodiment of the invention.

Figure 5 is a screen shot illustrating a generated child product, according to one embodiment of the invention.

Figure 6 is a block diagram illustrating components of a system configured to process a child transaction and a core account transaction, according to embodiments of the invention.

Figure 7 is a flow diagram of method steps for processing the child transaction and the core account transaction, according to one embodiment of the invention.

Figure 8 is a block diagram illustrating components of a system configured for generating and distributing accounts payable child products, according to embodiments of the invention.

Figure 9 is a flow diagram of method steps for distributing accounts payable child products, according to one embodiment of the invention.

Figure 10 is a flow diagram of method steps for guaranteeing the transfer of funds between a payor and a payee via an accounts payable child product, according to one embodiment of the invention.

### DETAILED DESCRIPTION

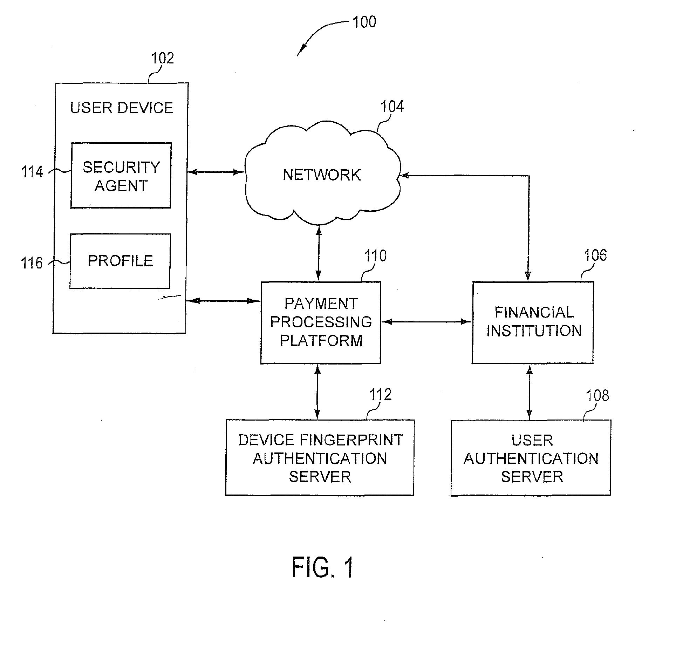

Figure 1 is a block diagram illustrating components of a system 100 configured to implement one or more aspects of the invention. As shown, the system 100 includes a user device 102, a network 104, a financial institution 106, a user authentication server 108, a payment processing platform 110, and a device finger print authentication server 112.

The user device 102 may be any type of individual computing device such as, for example, a desktop computer, a laptop computer, a hand-held mobile device, a personal digital assistant, or the like. Alternatively, the user device 102 may be any other device, such as a standard telephone, or an ATM terminal for a financial institution, or a terminal used by a customer representative at a financial institution, or the like. In one embodiment, the user device 102 is configured to be in communication with the other components in the system 100 via the network 104. The network 104 may be any type of data network, such as a local area network (LAN), a wide area network (WAN), cellular communications network, the Internet, a voice network such as a standard telephone network, or combinations thereof.

As is described in greater detail below, in some embodiments of the invention, a user may generate a "child product" that is linked to a "core account" held with a financial institution. In various embodiments, the core account may be any standard account held with a financial institution 106, including a checking account, a savings account, a home equity line of credit, a money market account, a credit card account, a debit card account, a prepaid card account, a gift card account, a healthcare savings account, an educational savings account, an employee benefits account, a promotion fund account a rewards account (e.g., mileage or rewards points) or the like. In other embodiments, the core account may be associated with any type of billed account, including a utility bill account, cable account, satellite television account, phone service account, cell phone account, or the like. The child product may be used to make payment transactions and the payment transactions may be processed as if the payment transactions were made using the core account. For example, a child product that is linked to a credit card core account is processed by the financial institution legacy system in a similar manner as a regular credit card transaction. Additionally, the child product may be used to deliver promotional coupons and/or to pay a salary of employees. In other use examples, the child product may be used to make an accounts payable transaction. In further embodiments, control parameters may be added to the child product, restricting the usage of the child product, as described in greater detail below.

In one embodiment, when a user wishes to generate the child product, the user may direct the user device 102 to navigate to a webpage of the financial institution 106. In another embodiment, the user may use an ATM terminal at the financial institution to generate the child product. In yet another embodiment, the user may request the generation of a child product through a customer service representative at a branch location of the financial institution 106. In yet another embodiment, the user may request the generation of a child product through a customer service representative at a customer support call center of the financial institution 106. In still further embodiments, the user may request the generation of the child product directly from the payment processing platform 110. In still further embodiments, the user may request generation of the child product via SMS or by phone via IVR (interactive voice recognition).

As described in greater detail below, the user may need to authenticate with the financial institution 106 before the child product is generated. In one embodiment, authentication includes the user being prompted to enter a username and/or password. In alternate embodiments, the user may be prompted to swipe an ATM card and enter a PIN number to authenticate. In yet additional embodiments, the user may be asked to show a driver's license or a government-issued photo identification to authenticate with the financial institution 106. In still further embodiments, the user may place a telephone call to the financial institution customer service phone number to generate a child product. Authentication may involve the user being asked questions to verify the identity of the user. In alternative embodiments, a third-party other than a financial institution, may offer the ability to generate child products. In these embodiments, the user may be authenticated using any of the authentication methods described in relation to authenticating with a financial institution.

In another embodiment, to provide an additional layer of security, the user device 102 may include a security agent 114 and device profile 116. After the user has been authenticated with the financial institution 106, the payment processing platform 110 may prompt the security agent 114 installed on the user device 102 for the device profile 116 of the user device 102. The security agent 114 transmits the device profile 116 to the payment processing platform 110. The received device profile 116 is compared to data stored in the device finger print authentication server 112 that may include a listing of approved/authenticated user devices associated with each user. In one embodiment, each time that a user attempts to authenticate with a different user device 102, a confirmation code is sent to an e-mail address for the user that the user enters before the user device is authenticated. In alternative embodiments, the confirmation code may be sent to the user via a SMS, a text message, or via any other electronic means including by telephone. Once a particular user device 102 has been confirmed, the device profile 116 of the user device 102 is stored in the database of the device finger print authentication server 112. The next time the user attempts to authenticate using that particular user device 102, the device profile 116 of the user device is recognized by the device finger print authentication server 112 and the user is authenticated. Once the user is properly authenticated, the user may generate the child product.

In still further embodiments, control parameters are applied to the core account held with the financial institution. In these embodiments, a child product may or may not be generated.

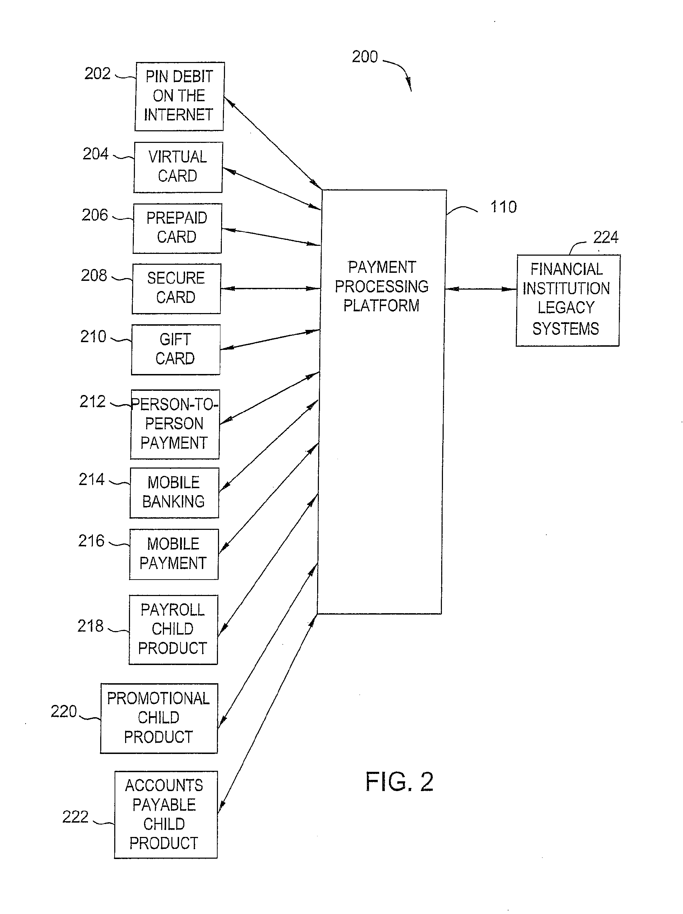

Figure 2 is a conceptual illustration of a system 200 including a payment processing platform 110, according to one embodiment of the invention. As shown, the payment processing platform 110 serves as a processor between various child products 202-222 and financial institution legacy systems 224. However, in other embodiments, the payment processing platform 110 may reside between any number of financial systems. Child products may include a PIN debit child product 202, a virtual card child product 204, a prepaid card child product 206, a secure card child product 208, a gift card child product 210, a person-to-person payment child product 212, a mobile banking child product 214, a mobile payment child product 216, a payroll child product 218, a promotional child product 220, or an accounts payable child product 222. One or more child products 202-222 are delivered to a recipient that may use the child products 202-222 to make a payment. In one embodiment, the recipient is the same individual as the user that generated the child product. In alternative embodiments, the recipient is different from the user that generated the child product.

As is known, in a debit transaction, a debit card or bank card is used to make a payment. The use of a debit card is functionally similar to writing a check, as the funds are withdrawn directly from the financial institution account of a customer. In a conventional PIN-debit card transaction at a physical merchant location, the customer may swipe or insert the debit card into a terminal and the transaction is authenticated by entering a personal identification number (PIN). However, PIN-debit transactions are not initiated on the Internet because customers are wary of entering their PIN number into a browser webpage for security reasons.

The PIN debit child product 202 allows for PIN debit transactions on the Internet. From a payment page of an online merchant, a user/customer may select a "Pay From My Financial Institution" payment option. At this point, the user/customer is authenticated through the financial institution's authentication server 108, as described above in Figure 1. A virtual debit card number and a virtual PIN may be generated that are linked to the account of the user/customer held at the financial institution. The user/customer is able to initiate the online transaction as if the transaction was being made using a normal debit card. In this way, because the user/customer has already been authenticated with the financial institution through the financial institution's authentication server 108, the virtual PIN serves the same purpose as a real PIN from the merchant's perspective. In this way, the core account transaction is processed as a PIN debit transaction at the financial institution. In another embodiment, the payment processing platform receives a trigger from a merchant. In response, the payment processing platform transmits a listing of financial institutions offering the ability to generate child products to the merchant. A user/customer selects a financial institution from the listing and the user is authenticated through the financial institution's authentication server 108, as described above in Figure 1

A virtual card child product 204 is a payment method for which non physical manifestation of child card is generated. A user may create a virtual card child product 204 as a virtual credit or debit card, having a seemingly "normal" credit/debit card number, which can be used by the customer for card-not-present transactions such as online transaction, or mail-order telephone orders (MOTO) transactions. In alternative embodiments, a virtual card child product 204 may be generated and the card number may be associated with the contactless payment options enabled by a mobile device such as a radio-frequency identification (RFID) tag of a mobile device to allow a customer to make contactless payments at a point-of-sale location. In further embodiments, a virtual card child product 204 may be generated and the customer may print out an image of the virtual card child product, optionally including other identifying information such as a bar code, and take the print-out to a merchant location as a form of payment.

The prepaid card child product 206 may be generated with a preloaded balance. A user may load the prepaid card child product 206 with a limit that cannot be exceeded. Additional control parameters may include a per-transaction limit, or impose further restrictions, as described below. The prepaid card child product 206 may be a physical card, a virtual card, or both a physical card and a virtual card.

A secure card child product 208 is a payment method where child product is generated that is linked to a core account. In one embodiment, transaction made using the secure card child product 208 may be processed similar to transactions made using the core account. Additional control parameters may limit a per-transaction limit, or impose further restrictions, as described below. The secure card child product 208 may be a physical card, a virtual card, or both a physical card and a virtual card.

The gift card child product 210 is a payment method that may be given to another as a gift. The gift card child product 210 may be a physical card, a virtual card, or both a physical card and a virtual card. A gift card child product 210 is different from a prepaid card child product 206 since no funds are withdrawn/charged to the core account when a gift card child product 210 is generated. A gift card child product 210 may still include a limit; however, funds are only withdrawn/charged to the core account when transactions are initiated with the gift card child product 210. In other words, a portion of credit available in the core account is allocated for use by a recipient of the gift card child product 210. This differs from the prepaid card child product 206 which is generated with a pre-loaded balance.

The person-to-person payment child product 212 may be generated and used as a form of payment from one person/entity to another as a form of payment. In one embodiment, the person-to-person payment child product 212, like other child products, may be used to pay for goods or services in merchant transactions. In alternative embodiments, the person-to-person payment child product 212 may be converted to cash. The conversion may be a dollar-for-dollar conversion based on the card limits of the person-to-person payment child product 212, or may be some other ratio.

Mobile banking child products 214 and mobile payment child products 216 may be generated using a mobile device. Similarly, transactions made using other child products may be made with a mobile device.

The payroll child product 218 may be generated by an employer and distributed to employees as a form of salary payment. Each payroll child product 218 may be linked to the same core account (such as the employer's bank account) and may be distributed as a physical card and/or a virtual card. The payroll child product 218 may be generated having few, if any, control parameters that restrict the use of the payroll child product 218. The payroll child product 218 is a convenient mechanism for employers to distribute salaries and bonuses, and the payroll child product 218 provides flexibility to employees who do not have a checking or savings account at a commercial bank. Once distributed, the payroll child product 218 may be used to initiate one or more child transactions at various merchant locations, including payment transactions and/or redemption transactions. Redemption transactions are transactions that convert the payroll child product 218 into cash or initiate a deposit of an equivalent amount of funds into an account held by the recipient at a financial institution. Redemption of the payroll child product 218 may occur through an ATM terminal, a commercial bank branch location, a check-cashing location, or any other mechanism. The payroll child products 218 may include few, if any, control parameters other than value of the child product to provide recipients with maximum flexibility in how they use the funds linked to the payroll child product 218.

The promotional child product 220 may be generated by a merchant or franchisor and distributed to customers as a form of "coupon" or promotional discount. Promotional child products 220 can be mass-distributed to multiple customers, where each promotional child product 220 is linked to the same core account. Each promotional child product 220 may include the same values for the control parameters, such as expiration date, coupon value, and geographic region where the promotional child product 220 may be redeemed. In alternative embodiments, the control parameters (e.g., the value of the promotional child product 220) may vary for different customers based on certain criteria. For example, a franchisor may generate promotional child products 220 providing a $5.00 discount on purchases for customers in California, but the franchisor may generate promotional child product 220 providing a $3.00 discount on purchases for customers in Arizona for the same promotion. The promotional child product 220 may be delivered to the customers by the payment processing platform 110 via text message, e-mail, physical card, virtual card, and/or any other technically feasible medium.

The accounts payable child product 222 may be generated by a payor business and transmitted to a payee business as a form of payment. For example, a payor business may receive a bill for $10,000.00 for goods or services rendered by a payee business. The payor business may then cause an accounts payable child product 222 to be generated by the payment processing platform 110 with control parameters limiting the accounts payable child product 222 to a single transaction with a maximum transaction amount of $10,000.00. The accounts payable child product 222 is then delivered to the payee business, whereupon the payee business redeems the accounts payable child product 222. Redemption of the accounts payable child product 222 may occur through an ATM terminal, a commercial bank branch location, a check-cashing location, transfer of funds from an account held by the payor to an account held by the payee, or any other mechanism. Upon redemption, $10,000.00 is transferred from a financial institution of the payor business to a financial institution of the payee business. In some embodiments, additional control parameters can be added to the accounts payable child product 222, such as an expiration date or a particular geographical region that limits the boundaries of redemption. The control parameters may also specify that the child product is a multiple-use product that can be used for more than one transaction. These additional control parameters allow for enhanced security and efficiency of the transaction between the payor business and the payee business.

As described in greater detail below, any of the "child products" 202-222 described above may be applicable in the context of the core account.

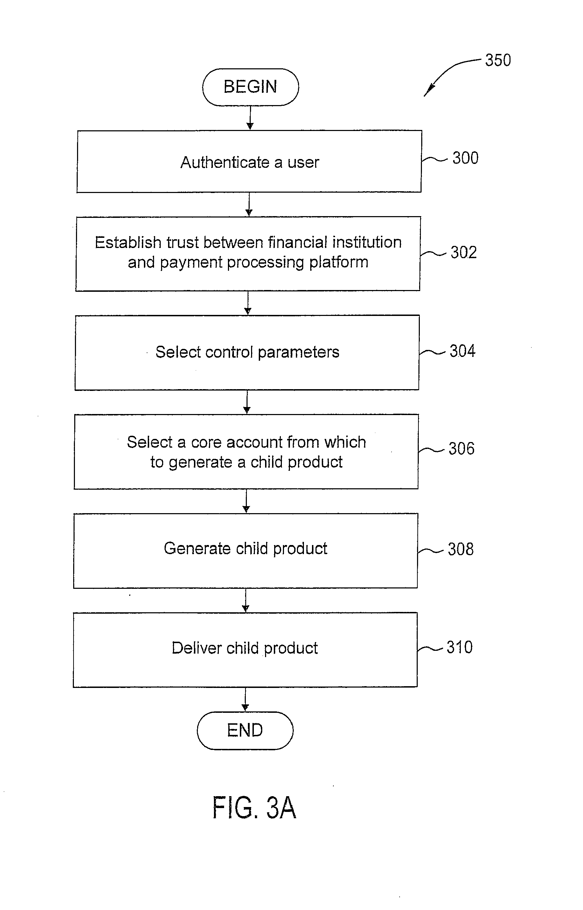

Figure 3A is a flow diagram of method steps for generating a child product, according to one embodiment of the invention. Persons skilled in the art will understand that, even though the method 350 is described in conjunction with the systems of Figures 1 and 2, any system configured to perform the steps of the method 350 illustrated in Figure 3A, in any order, is within the scope of the invention.

As shown, the method 350 begins at step 300, where a user is authenticated. In one embodiment, the user may be authenticated by entering a username and password into a log-on screen of a financial institution website. In alternative embodiments, a third-party other than a financial institution may offer the ability to generate child products. In these embodiments, the user may be authenticated by entering a username and password into a log-on screen of the third-party website. In yet further embodiments, the device with which the user is attempting to authenticate himself is verified by comparing a device profile for the user device against a database of user devices previously registered by the user, as described in reference to Figure 1.

In alternate embodiments, the user may be prompted to swipe an ATM card and enter a PIN number to authenticate. In yet additional embodiments, the user may be asked to show a driver's license or a government-issued photo identification to authenticate with the financial institution 106. In still further embodiments, the user may place a telephone call to the financial institution customer service phone number to generate a child product. Authentication may involve the user being asked questions to verify the identity of the user. For example, the user may be asked to verify a social security number and/or mother's maiden name. In yet other embodiments, the user may be authenticated using biometric characteristics. In still further embodiments, a user may be authenticated by the phone number used in sending an SMS or a voice call via the cellular service provider that transmits the SMS, with or without a PIN number being provided.

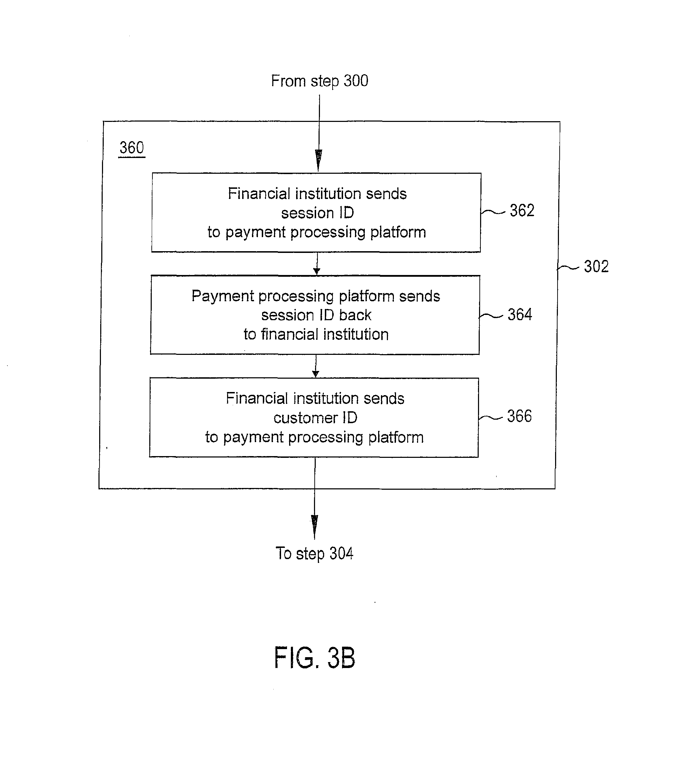

Once the user is properly authenticated, the method 350 proceeds to step 302, where a trust is established between the financial institution 106 and the payment processing platform 110. In another embodiment, at step 302, a trust is established between a third party, other than a financial institution, that may be responsible for authentication and the payment processing platform110. One embodiment of step 302 is described in greater detail in Figure 3B.

Figure 3B is flow diagram of method steps for establishing trust between a financial institution 106 and a payment processing platform 110, according to one embodiment of the invention. Persons skilled in the art will understand that, even though the method 360 is described in conjunction with the systems of Figures 1 and 2, any system configured to perform the steps of the method 360 illustrated in Figure 3B, in any order, is within the scope of the invention.

As shown, the method 360 begins at step 362, where the financial institution 106 sends a session identifier (session ID) to the payment processing platform 110 to begin the trust establishment process. Next, at step 364, the payment processing platform 110 sends the session ID back to the financial institution 106 through a back door to verify that the financial institution 106 had indeed sent that session ID, rather than a hacker, for instance. It should be noted that the exchange of the session ID is not the only means of establishing trust between the systems 106, 110; rather, trust may be established by any means known in the art without departing from the principles of the invention. Then, at step 366, the financial institution 106 sends a customer identifier (customer ID) to the payment processing platform 110. In one embodiment, within the servers of the payment processing platform 110, the customer ID may be used to translate from a child product card number to a "real" account number, as described in greater detail below.

Referring back to Figure 3A, at step 304, control parameters are selected. In one embodiment, control parameters include a series of restrictions on transactions made with the child product. For example, the control parameters may include, but are not limited to, a card spending limit, a per-transaction spending limit, a daily spending limit, a weekly spending limit, a limit on number of transactions in a given period of time, a name on card, an activation date, an expiration date, a country of use, a merchant of use, a merchant category, a time of day, a day of week, a date of month, a merchant channel (online, point-of-sale), a reset frequency for reset-able cards, a geographical region for valid redemption, and the like.

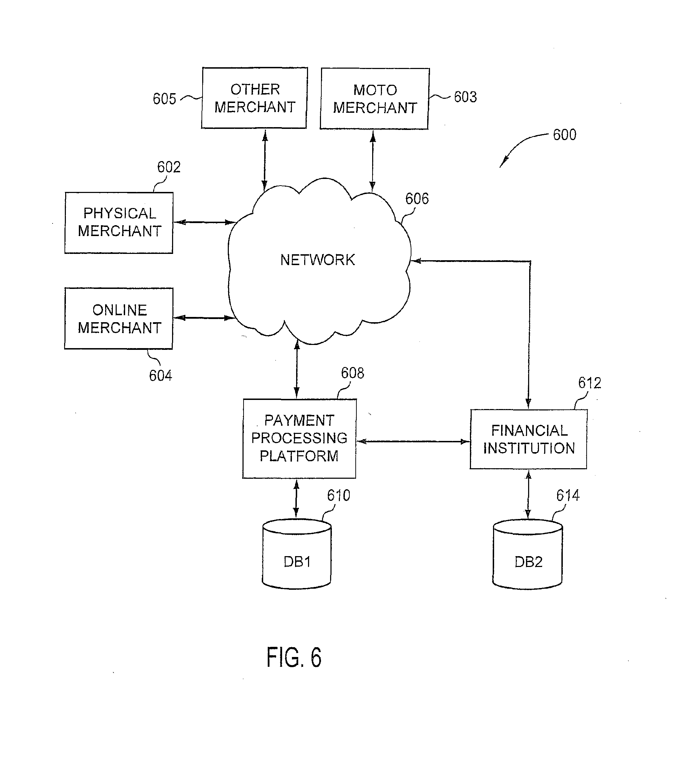

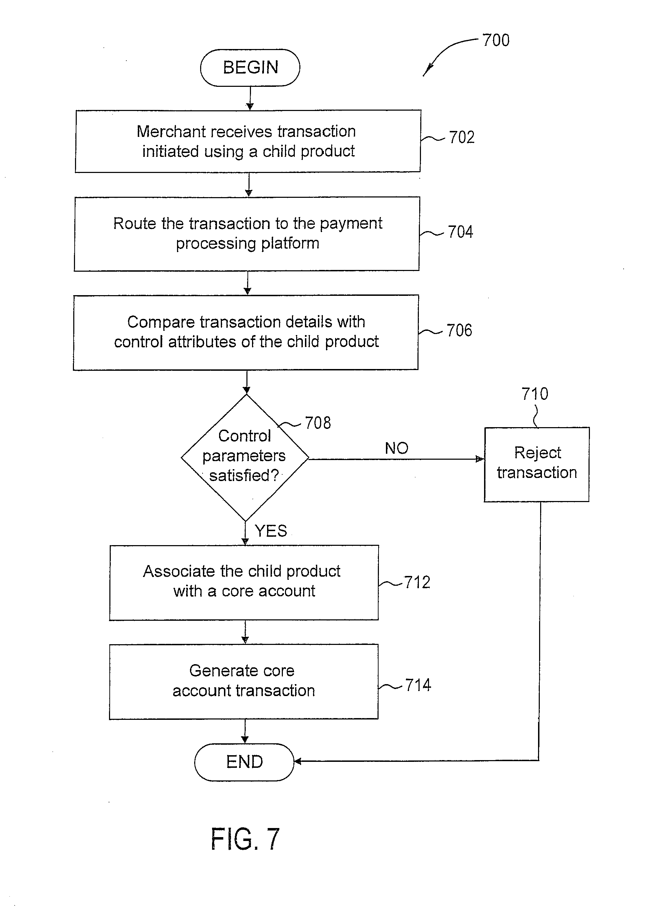

When a child product is attempted to be used in a transaction, the transaction details may be checked against the control parameters stored for the child product. In one embodiment, if at least one of the control parameters is not satisfied, then the transaction is rejected. If each of the control parameters satisfy those stored for the child product, the transaction proceeds to processing, as described in greater detail below in Figures 6 and 7. In alternative embodiments, if a minimum number of control parameters are satisfied, then the transaction is approved. For example, a child product may include five control parameters and a transaction is approved if four out of five control parameters are satisfied. In still further embodiments, control parameters may be assigned "weights" such that a transaction is approved if the sum of the weights assigned to the satisfied control parameters exceeds a minimum value. For example, a per-transaction limit control parameter may be assigned a weight of five, a merchant category control parameter may be assigned a weight of four, a merchant name parameter may be assigned a weight of three, and all other control parameters may be assigned a weight of two. In this example, a transaction may be approved if the sum of the satisfied control parameters exceeds ten. As will be understood by those having ordinary skill in the art, other techniques for comparing the transaction details against the control parameters stored for the child product may be available.

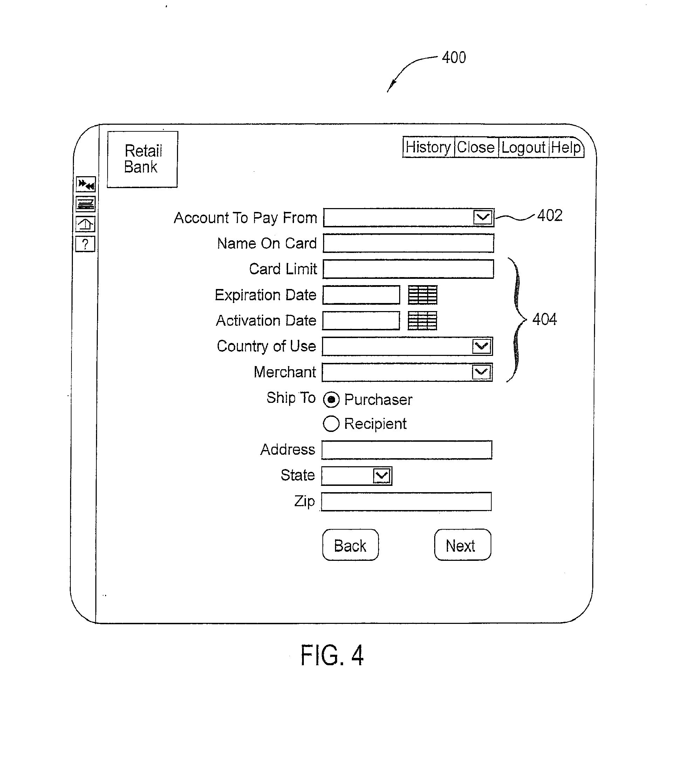

Figure 4 is a screen shot 400 illustrating selection of control parameters 404 for a child product, according to one embodiment of the invention. In one embodiment, the selection of the core account 402 may be included in a single screen with the selection of the control parameters 404. As shown, the control parameters include card limit, expiration date, activation date, country of use, and merchant of use. As one having ordinary skill in the art will appreciate, additional control parameters may be selected for the child product, including merchant category (e.g., "restaurants"). For convenience, each child card may be given a name to remind a user of the purpose of a child card.

Referring back to Figure 3A, at step 306, a core account is selected from which to generate a child product. In one embodiment, the core account may be any type of financial account held with a financial institution. For example, the core account may be a checking, savings, home equity, credit card account, or the like. When a child product is generated from a core account, any transactions made using the child product are processed as though the transaction was made using the core account, as is described in greater detail below.

At step 308, a child product is generated. In one embodiment, the child product is generated having a 16-digit card number, a card identification value, an expiration date, and a name on card. As is known, a card number includes a Bank Identification Number or BIN number. The BIN number is generally a one- to six-digit number that identifies the financial institution that issued the credit/debit card. In one embodiment of the invention, the child product generated at step 308 includes a BIN number that identifies that the child product as being issued by the payment processing platform 110. In alternative embodiments, the generated child card may include a BIN number within a range that identifies that the child product is associated with a particular financial institution, but is nevertheless a child product. In still further embodiments, depending on the category of the selected core account, the financial institution may request that the payment processing platform issue a child product of a particular type. For example, if the user selects a credit card account as the core account, then the generated child product may include a BIN number that identifies that child card as being a credit card that is processed through a particular credit card network.

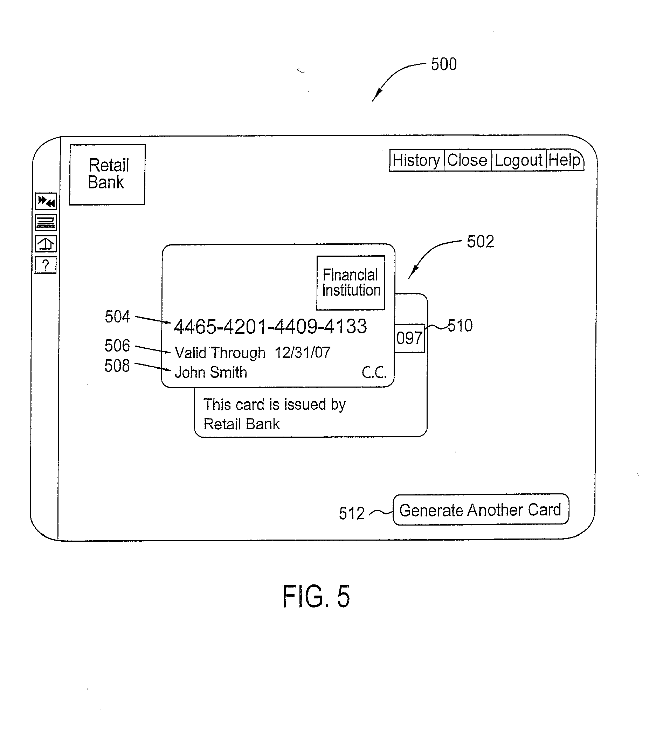

Figure 5 is a screen shot 500 illustrating a generated child product 502, according to one embodiment of the invention. As shown, the child product 502 includes a card number 504, expiration date 506, name 508, and card identification value 510. As described above, a physical card may be requested and mailed to the address input when generating the child product 502. Alternatively, the child product 502 may be delivered electronically as a virtual card, or the child product 502 may be delivered both physically and electronically. The child product 502 can be used at a physical merchant or at a card-not-present merchant, such as online merchants, or mail-order telephone orders (MOTO) merchants, or any other place where a card is accepted as a payment instrument. In one embodiment, a virtual card may be generated and the card number may be associated with the contactless mobile payment solution such as a radio-frequency identification (RFID) tag of a mobile device to allow a user to make contactless payments at a point-of-sale location. In further embodiments, a virtual card may be generated and the user may print out an image of the virtual card child product, optionally including other identifying information such as a bar code, and take the print-out to a merchant location as a form of payment. In one embodiment, the card identification value is a Card Verification Value, like CVV, CVV2, PIN number, or any other card identification value.

Referring back to Figure 3A, at step 310 the child product is delivered to the customer. In one embodiment, the child product may be a physical card that is mailed to the customer or to the recipient. In alternative embodiments, the child product may be a virtual card that is available to the customer/recipient through a web browser. Alternatively, the child product may be a virtual card that is e-mailed to the customer/recipient, sent using a SMS, sent using any electronics medium, delivered over the phone, by FAX, or by a hypertext markup language (HTML) link to download information associated with the child product. A virtual card is a payment method for which a non physical manifestation of child card is generated. In some embodiments, a physical manifestation is also generated in addition to the non-physical virtual card. A user may create a virtual card as a virtual credit or debit card, having a seemingly "normal" credit/debit card number, which can be used by the customer for card-not-present transactions such as online transaction, or mail-order telephone orders (MOTO) transactions. In alternative embodiments, a virtual card may be generated and the card number may be associated with the contactless payment options enabled by a mobile device such as a radio-frequency identification (RFID) tag of a mobile device to allow a customer to make contactless payments at a point-of-sale location. In further embodiments, a virtual card may be generated and the customer may print out an image of the virtual card child product, optionally including other identifying information such as a bar code, and take the print-out to a merchant location as a form of payment.

In other embodiments, a plurality of child products can be generated according to a file received via techniques including, but not limited to, secure FTP, web-page upload forms, email attachments, or the like. In one embodiment, the file includes plain-text instructions that may be easily generated and modified by the user via a text-editor. In another embodiment, the file includes binary data that is representative of one or more instructions.

The file is authenticated using any of the techniques described herein, i.e., by verifying user information included in the file, by verifying the entity that is submitting the file, through key exchanges, or the like. The file is parsed to separate one or more instructions included therein. Here, the instructions may specify any management operations that are applicable to generating child accounts, and the control parameters associated therewith. For example, a particular file can include a first instruction that creates a new child account and a second instruction that modifies control parameters associated with the child account.

Upon execution of the instructions, a confirmation is transmitted back to whomever submitted the file. In one embodiment, the confirmation includes an itemized list of the instructions included in the file, where the confirmation further indicates whether each instruction was successfully executed.

Figure 6 is a block diagram illustrating components of a system 600 configured to process a child transaction and a core account transaction, according to embodiments of the invention. As shown, the system 600 includes the physical merchant 602, mail-order telephone orders (MOTO) merchant 603, online merchant 604, other merchant 605, a network 606, a payment processing platform 608, a first database 610, a financial institution 612, and a second database 614.

In one embodiment, a transaction initiated with a child product is known as a "child transaction." In some embodiments, the child product comprises a financial product that is linked to a core account. As described above, a child product may be delivered in the form of a physical card mailed to a customer or to a recipient. Alternatively, the child product may be delivered electronically as a virtual card. Alternatively, the child product may be delivered both physically as a physical card and electronically as a virtual card. Both the physical card child product and the virtual child card product may be used at any physical merchant 602, MOTO merchant 603, online merchant 604, or other merchant 605 that accepts regular credit/debit cards.

A child transaction may be initiated at the physical merchant 602. For example, a cashier at the physical merchant 602 may swipe the physical child product through a card reader. Alternatively, a child product may be delivered virtually on a user's mobile device and a user at the physical merchant 602 may wave his/her mobile device in front of a contact-less card reader. In still further embodiments, the customer may show his/her mobile device to a cashier at the merchant location who manually enters the card number of the child product. Alternatively, the mobile device may include a contactless chip or tag that is wireless readable.

In one embodiment, the network 606 is a card network. In alternative embodiments, the network 606 is an electronic funds transfer (EFT) network or a private network. For example, the child product may be a credit card child product, in which case child transaction information is sent to the appropriate credit card network. Similarly, the child product may be a signature debit card child product, in which case the child transaction information is sent to the appropriate debit card network. In other embodiments, the child product may be a PIN debit card, in which case the child transaction information is sent to the appropriate EFT network. Additionally, the child product may be a special card, in which case the child transaction information is sent to the appropriate private network.

In one embodiment, when a child transaction is received by the network 606 and identified as having a BIN number in the range associated with the payment processing platform 608, then the child transaction is routed to the payment processing platform 608. In another embodiment, when a child transaction is received by the network 606 and identified as having a special BIN number in the range associated with a financial institution of the core account, then the child transaction is routed to the payment processing platform 608. In other embodiments, a financial institution may route the child transaction to the payment processing platform.

When a child transaction is received by the payment processing platform 608, the payment processing platform 608 may then compare the child transaction details with control parameters stored for that particular child product in the first database 610. As described above, the comparison may require that each control parameter stored for the child product is satisfied, that a minimum number of control parameters are satisfied, or that a sum of the weights assigned to control parameters that are satisfied exceeds a minimum threshold. In one embodiment, if at least one of the control parameters is not satisfied, then the payment processing platform may return a decline response to the network 606 and the child transaction is denied. If each of the control parameters is satisfied, then the card number of the child product is linked to the "real" account number of the core account to which the child product is linked. In embodiments where the child product comprises a core account with control parameters, then "real" account number is already known and no mapping is performed.

In one embodiment, the second database 614 contains the mapping from child product card numbers to core account numbers, and may be located on the systems of the financial institution 612. In alternative embodiments, the second database 614 may reside on systems operated by the payment processing platform 608. In yet another embodiment, database 610 and 614 may be combined. Once the core account number is determined, a core account transaction is generated and is transmitted to the network 606 for normal routing and processing as a core account transaction. The core account transaction is sent to the financial institution that issued the core account. The processing system at the financial institution that issued the core account processes the core account transaction in normal fashion and approves or denies the transaction based on a normal set of processing rules.

In embodiments where the child transaction is received at a merchant and transmitted from the financial institution 612 to the payment processing platform 608, the core account transaction generated by the payment processing platform 608 is transmitted to the financial institution 612, bypassing the network 606.

A similar child transaction may be initiated from an online merchant 604, from a MOTO merchant 603, or from any other merchant 605. In one embodiment, the user may input the child product card number into a payment webpage and an online child transaction is initiated. In another embodiment, the user may submit the child product card number to a customer service representative at a MOTO merchant 603. In yet another embodiment, the user may submit the child product card number in a mail order form to a MOTO merchant 603. A child transaction initiated at a MOTO merchant 603, at an online merchant 604, or at any other merchant 605 may be processed in similar fashion to a child transaction initiated at the physical merchant location 602.

Figure 7 is a flow diagram of method steps for processing a child transaction and a core account transaction, according to one embodiment of the invention. Persons skilled in the art will understand that, even though the method 700 is described in conjunction with the systems of Figures 1, 2, and 6 any system configured to perform the steps of the method 700 illustrated in Figure 7, in any order, is within the scope of the invention.

As shown, the method 700 begins at step 702, where a merchant receives a child transaction initiated using a child product. In one embodiment, the merchant is a physical merchant and the child transaction is initiated by the child product (physical card) being swiped through a credit card reader or virtual card waved in front of a contactless card reader or virtual card read by a bar code reader, or the child product waved in front of a contactless card reader, or the merchant reading a card number from device or a print out. In alternative embodiments, the merchant is an online merchant, MOTO merchant, or other merchant that receives a child product card number that is input into a payment webpage of the online merchant website, over the phone, via a mail-order, via a computer program interface, or via any other means.

At step 704, the child transaction is routed to the payment processing platform. As described above, a child product includes a BIN number within a BIN number range that identifies the child product as such. In one embodiment, the child transaction is passed directly to the payment processing platform from the merchant, bypassing the network. In alternative embodiments, the child transaction is passed from the merchant to a network. In alternative embodiments the child transaction is passed from a merchant to the financial institution 612 and then passed to the payment processing platform 608. As described, the child product may be a credit card, in which case the child transaction information is sent to the appropriate credit card network. Alternatively, the child product may be a signature debit card, in which case the child transaction information is sent to the appropriate debit card network. The child product may be a PIN debit card, in which case the child transaction information is sent to the appropriate EFT network. The child product may be a special card, in which case the child transaction information is sent to the appropriate private network. In further embodiments, the child transaction is processed through multiple networks before ultimately being routed to the payment processing platform. In one embodiment, to the merchant, the child transaction may proceed as though the payment processing platform is the "issuer" of the child product with which the child transaction is initiated.

At step 706, the payment processing platform compares the child transaction details with control parameters of the child product. As described above, each child product is associated with a series of control parameters that are stored in a first database DB1, referenced by child product. When the child transaction is received by the payment processing platform, the child product card number may be used as a reference pointer to determine the associated control parameters stored in the first database DB1.

At step 708, if the control parameters of the child transaction do not satisfy the control parameters stored in the first database DB1, then the child transaction is rejected, a denial is returned at step 710, and the method 700 terminates. In one embodiment, if the child transaction was routed from the merchant to the payment processing platform bypassing the network, then the denial is returned directly to the merchant. In alternative embodiments, if the child transaction was routed through a network to the payment processing platform, then the denial is returned to the network and routed to the merchant. In another embodiment, if the child transaction was routed from a financial institution to the payment processing platform, then the denial is returned to a financial institution.

As described above, the determination of whether the control parameters are satisfied at step 708 may require that each control parameter stored for the child product is satisfied, that a minimum number of control parameters are satisfied, or that a sum of the weights assigned to control parameters that are satisfied exceeds a minimum value. If at step 708 the control parameters are satisfied, then the method 700 proceeds to step 712.

At step 712, the child product is associated with a core account. As described above, a second database DB2 stores a mapping of the child product to the core account to which the child product is linked. In one embodiment, the second database DB2 resides on the financial institution system. In alternative embodiments, the second database DB2 resides within a system associated with the payment processing platform.

At step 714, a core account transaction is generated based on the core account number and other child transaction details. In one embodiment, the core account transaction is transmitted to the network for normal processing. For example, the financial institution that receives the core account transaction may view the core account transaction with the payment processing platform as being the "merchant" from which the transaction was initiated. In alternative embodiments, the core account transaction is transmitted directly to the financial institution from the payment processing platform, bypassing the network.

In one embodiment, when the core account transaction is received at the financial institution, the financial institution views the core account transaction as initiating from the payment processing platform as a merchant entity. Thus, the financial institution processes the core account transaction and transfers funds to the payment processing platform, which in turn transfers the funds to the original merchant. In alternative embodiments, the financial institution that receives the core account transaction can determine the original merchant is the payee, and the funds are transferred to the merchant, bypassing the payment processing platform. In this manner, a two-part transaction is completed. In one embodiment, the child transaction, as described at step 702-706, is processed as though the payment processing platform is the "issuer" of the child product. Then, the core account transaction, as described at steps 712-714, is processed by the financial institution as though the payment processing platform is the "merchant" that initiated the core account transaction.

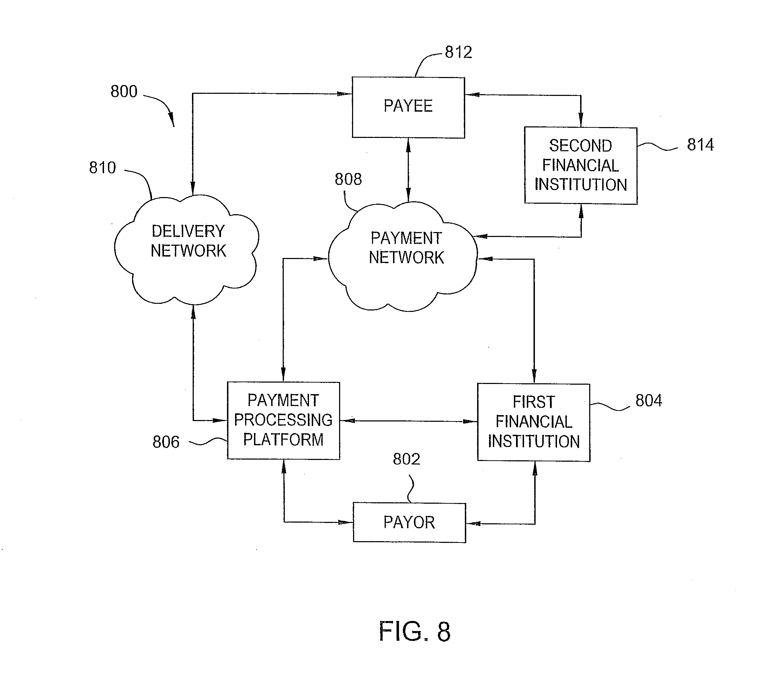

Figure 8 is a block diagram illustrating components of a system 800 configured for generating and distributing accounts payable child products 222, according to embodiments of the invention. As shown, the system 800 includes a payor 802, a first financial institution 804, a payment processing platform 806, a payment network 808, a delivery network 810, a payee 812, and a second financial institution 814.

In one embodiment, the payor 802 owes money to a payee 812, and the child product is an accounts payable child product 222. The payor 802 may cause child products to be generated by the payment processing platform 806. An accounts payable child product 222 may be generated by the payment processing platform 806 and delivered to the payee 812 to pay for goods or services rendered by the payee 812.

In one embodiment, the payor 802 holds a financial account with the first financial institution 804, and the payee 812 holds a financial account with the second financial institution 814. In various embodiments, the financial accounts may be any type of standard account held with the financial institutions 804 and 814, respectively, including a checking account, a savings account, a home equity line of credit, a money market account, a credit card account, a healthcare savings account, an educational savings account, an employee benefits account, a promotion fund account, or the like.

In one embodiment, accounts payable child products 222 are generated by the payor 802 as a form of payment for goods services rendered by the payee 812. Accounts payable child products 222 may include different control parameters, such as different dollar amount values. For example, a payee 812 may bill the payor 802 in the amount of $10,000.00. The payor 802 causes an accounts payable child product 222 with a value control parameter of $10,000.00 to be generated by the payment processing platform 806. The accounts payable child product 222 is then delivered to the payee 812 via the delivery network 810 and may be used by payee 812 to initiate a redemption transaction. A redemption transaction is a transaction that converts the accounts payable child product 222 into cash or initiates a deposit of an equivalent amount of funds into a financial account held by the payee 812 at a second financial institution 814. The accounts payable child product 222 may include few, if any, control parameters other than value of the accounts payable child product 222 to provide the payee 812 with maximum flexibility in redeeming the funds associated with the accounts payable child product 222.

In some embodiments, the payor 802 may provide a data file to the payment processing platform 806 that includes payment amounts, control parameters, contact information for different payees 812 and specific instructions for distributing one or more accounts payable child products 222 to each of the different payees 812. Alternatively, the payor 802 may input the payment amounts, control parameters, contact information and or payment instructions into a webpage or computer program interface managed by the payment processing platform 806 that is configured to accept child product information specifying the different payees 812 and the distribution instructions. In any case, the payees may receive one or more child products according to the information submitted by the payor 802, where each of the child products pays for either a portion of the total payment amount or all of total payment amount.

The payment processing platform 806 distributes the accounts payable child products 222 to the payees 812 via the delivery network 810. As described, the accounts payable child products 222 may be in the form of virtual and/or physical child products, email child products, text message and/or SMS child products, printable child products, FAX, HTML link, and the like. The delivery network 810 may be an email routing network, a cell phone network, a cable television network, a satellite network, a postal network, the Internet, a voice network such as a standard telephone network, or the like, depending on the form of the child product.

The payee 812 can redeem the accounts payable child product 222 via payment network 808. To redeem the accounts payable child product 222, the payee 812 initiates a "child transaction" through the payment network 808 to the payment processing platform 806, as described in Figures 6 and 7. The child transaction is received at the payment processing platform 806, where the payment processing platform 806 verifies that the child transaction details satisfy the control parameters. If all of the control parameters are satisfied for the child transaction, the payment processing platform 806 creates a core account transaction. If the core account transaction is approved by financial institution, a payment is made from the financial account held by the payor 802 at the first financial institution 804 to the financial account held by the payee 812 at the second financial institution 814. In one embodiment, a control parameter may be a single-use child product so that child product cannot be used more than one time. In another embodiment, a control parameter may specify that the child product is redeemable only when the exact amount of the payment is requested. For example, if the child product represents $5,000.00 in funds, and a transaction for any amount other than $5,000.00 is requested, e.g., $4,999.00, then the transaction fails. Such techniques reduce errors in reconciliation processes.

In one embodiment, the funds remain in the financial account held by the payor 802 at the first financial institution 804 until the child transaction is verified by the payment processing platform 806. For example, continuing with the example above of the payor 802 that causes a $10,000.00 accounts payable child product 222 to be generated and delivered to the payee 812, the $10,000.00 in funds held in the financial account held by the payor 802 at the first financial institution 804 remain held at the first financial institution 804 until the funds are redeemed by the payor 802 and transferred to the financial account held by the payee 812 the second financial institution 814. In this fashion, the payor 802 holds the funds in the core account at the first financial institution 804 for a longer period of time, allowing the payor 802 to earn more interest, when compared to prior art techniques.

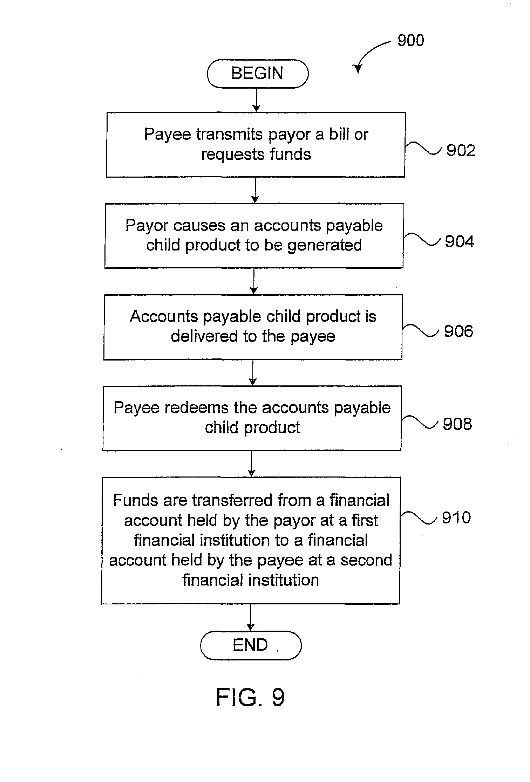

Figure 9 is a flow diagram of method steps for distributing accounts payable child products 222, according to one embodiment of the invention. Persons skilled in the art will understand that, even though the method 900 is described in conjunction with the systems of Figures 1-2, 4-6, and 8, any system configured to perform the steps of the method 900 illustrated in Figure 9, in any order, is within the scope of the invention.

As shown, the method 900 begins at step 902, where the payee 812 transmits a bill, an invoice or request for funds to the payor 802. In one embodiment, the payee 812 may transmit the bill via an email routing network, a cell phone network, a postal network, the Internet, a voice network such as a standard telephone network, or the like.

At step 904, the payor 802 causes an accounts payable child product 222 to be generated by the payment processing platform 806. The accounts payable child product 222, in some embodiments, includes a child product account number that is mapped to a particular financial account held by the payor 802 at the first financial institution 804 (i.e., a "core account"). For example, the accounts payable financial child product may include a card number having a bank identification number (BIN number) that is based on an account type associated with the core account. In some embodiments, the accounts payable child product 222 may also include appropriate control parameters, such as, for example, a value limit and activation date. In one embodiment, the payor 802 may input, via a webpage or computer program interface, the contact information of the payee 812 that is to receive the accounts payable child product 222. The contact information may include an email address, a cell phone number, a postal address, a customer number, an employee identification number, a social security number, and the like. The contact information is used by the payment processing platform 806 to deliver the accounts payable child products 222 to the payee 812 via the delivery network 810. In another embodiment, this information is provided via a file, as previously described herein.

At step 906, the payment processing platform 806 delivers the accounts payable child product 222 to the payee 812 via the delivery network 810. Various delivery networks 810 are contemplated, including, but not limited to, an email routing network, a cell phone network, a cable television network, a satellite network, a postal network, the Internet, a voice network such as a standard telephone network, or the like, or any combination of different delivery networks 810.

At step 908, the payee 812 redeems the accounts payable child product 222. The payee 812 can initiate a redemption transaction via the payment network 808 and/or the payment processing platform 806 to initiate a transfer of funds from the financial account held by the payor 802 at the first financial institution 804 to the financial account held by the payee 812 at the second financial institution 814. The payment processing platform 806 receives the redemption transaction request and determines whether the control parameters applied to the accounts payable child product 222 are satisfied. If the control parameters are satisfied, then the payment processing platform 806 determines the financial account to which the accounts payable child product 222 is mapped. The transfer of funds is then initiated from the financial account (i.e., the core account) of the payor 802 to a financial account held by the payee 812.

At step 910, the funds are transferred, from the financial account held by the payor 802 at the first financial institution 804 to the financial account held by the payee 812 at the second financial institution 814. In some embodiments, the payor 802 and payee 812 both hold accounts at a single financial institution, and the first financial institution 804 is the same as the second financial institution 814. Once the funds are transferred from the financial account held by the payor 802 to the financial account held by the payee 812, the accounts payable payment process between the payor 802 and the payee 812 is complete.

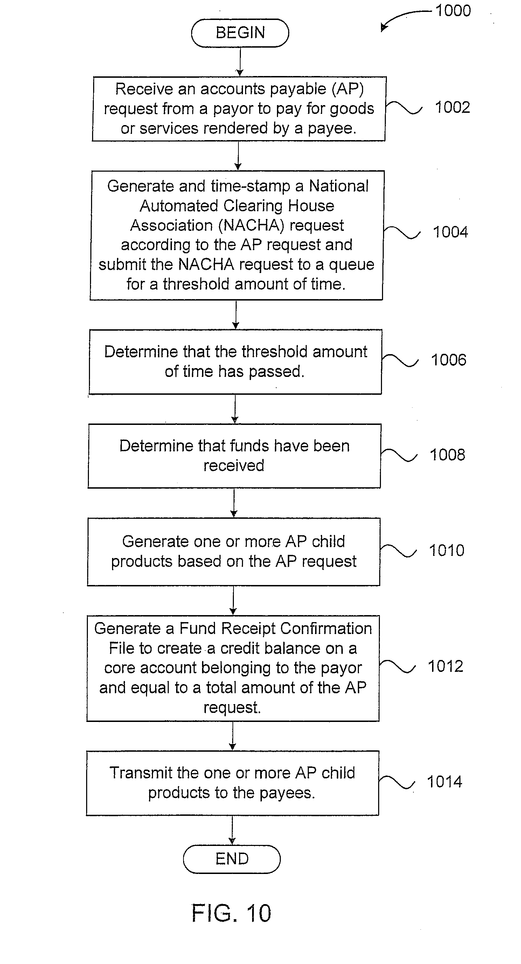

Figure 10 is a flow diagram of method steps for guaranteeing the transfer of funds between a payor and a payee via an accounts payable child product, according to one embodiment of the invention. Persons skilled in the art will understand that, even though the method 1000 is described in conjunction with the systems of Figures 1-2, 4-6, and 8-9, any system configured to perform the steps of the method 1000 illustrated in Figure 10, in any order, is within the scope of the invention. Persons skilled in the art will further understand that, even though the method 1000 makes specific use of both National Automated Clearing House Association (NACHA) requests and Fund Receipt Confirmation Files, any corresponding techniques that offer similar functionality, respectively, are also within the scope of the invention.

As shown, the method 1000 begins at step 1002, where the payment processing platform receives an accounts payable (AP) request from a payor to pay for goods or services rendered by one or more payees. At step 1004, the payment processing platform generates and time-stamps a National Automated Clearing House Association (NACHA) request according to the AP request and submits the NACHA request to a queue for a threshold amount of time. Specifically, generating the NACHA request involves parsing the AP request to determine various parameters including, but not limited, to, the number of payments to be made, the amount for each payment, the payees to receive the payments, and the like. For example, if a payor is requesting to pay three payees for $500 each, then the payment processing platform generates the NACHA file for a total amount of $1,500.

In one embodiment, the threshold amount of time is set at forty-eight hours, thereby guaranteeing that the funds from the payor's account are received prior to generating the accounts payable child product. In other embodiments, the payment processing platform is configured to place the AP request into a "pending" status until the NACHA request is cleared by the processing entity associated therewith.

At step 1006, the payment processing platform determines that the threshold amount of time has passed. At step 1008, the payment processing platform determines that funds have been received. However, if there is a payor-initiated cancellation or any unusual activity, e.g., insufficient funds or flagged accounts, then the payment processing platform terminates the pending AP request and, optionally, notifies the payor and/or payee.

At step 1010, the payment processing platform generates the AP child products based on the AP request. At step 1012, the payment processing platform generates a Fund Receipt Confirmation File to create a credit balance on a core account belonging to the payor and equal to a total amount of the AP request. At step 1014, the payment processing platform transmits the one or more AP child products to the payees. Accordingly, the payees may then redeem the AP child products according to the method step 910 describe above in conjunction with Figure 9, whereupon an appropriate amount of funds are transferred from a core account of the payor to an account of the payee.

One advantage of embodiments of the invention is that the accounts payable child products 222 provide enhanced security relative to conventional techniques for accounts payable. Accounts payable child products 222 provide enhanced security through the use of the control parameters, as discussed at step 304 of Figure 3A. For example, the payor 802 can ensure the accuracy of the payment to the payee 812 by including a control parameter value limit equal to the amount billed by the payee 812. The payor 802 can further enhance security through the addition of a geographical region control parameter, ensuring that the accounts payable child product 222 cannot be redeemed outside the specified geographical region. Additional security is available via single-use control parameters, as described above.

Another advantage is that the accounts payable child products 222 can be delivered instantly the payee 812 in the form of virtual child products, email child products, text message and/or SMS child products, or the like. Such formats eliminate the typical delays of physically-mailed checks, thereby decreasing the latency involved in typical accounts payable systems.

The payor 802 can also advantageously include an activation date control parameter in the generated accounts payable child product 222 equal to the due date of the money owed to payee 812. This allows the payor 802 to hold the funds at the financial institution of the payor 812 for a longer period of time, allowing the payor 802 to earn more interest and to take advantage of various lending or investment opportunities using these funds.

Finally, since creating, distributing, and redeeming of accounts payable child products 222 can be performed using existing legacy payment networks, financial institutions only need to minimally modify legacy payment processing infrastructure.

In sum, embodiments of the invention provide enhanced techniques for facilitating the transfer of funds from a payor to a payee. The payor causes an accounts payable child product to be generated by a payment processing platform, where the accounts payable child product is backed by one or more core financial accounts held by the payor. The accounts payable product can include optional security enhancements through the application of one or more control parameters to the accounts payable child product. The accounts payable child product is then generated by the payment processing platform and delivered to the payee. Upon receipt, the payee can initiate a redemption of the accounts payable child product via a redemption transaction. If the control parameters associated with the accounts payable child product are satisfied, then the transfer of funds occurs from a core financial account held by the payor to the core financial account held by the payee. In one embodiment, the transfer is accomplished by using existing financial network systems. The funds are then removed from a core financial account held by the payor and deposited into the core account held by the payee, whereupon the transaction is complete.

While the forgoing is directed to embodiments of the present invention, other and further embodiments of the invention may be devised without departing from the basic scope thereof. For example, aspects of the present invention may be implemented in hardware or software or in a combination of hardware and software. In addition, one embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, flash memory, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory) on which alterable information is stored. Such computer-readable storage media, when carrying computer-readable instructions that direct the functions of the present invention, are embodiments of the present invention. Therefore, the scope of the present invention is determined by the claims that follow.

## Claims

1. A computer-implemented method for generating a first accounts payable financial product that is configured to be used for one or more payment transactions, the method comprising:
receiving a selection of a core account for providing financial backing for the first accounts payable financial product;
receiving a selection of a first recipient payee to which the first accounts payable financial product is to be distributed;
generating the first accounts payable financial product based on one or more control parameters that define use restrictions for the first accounts payable financial product; and
causing the first accounts payable financial product to be distributed to the first recipient payee.

2. The method of claim 1, wherein a different core account provides financial backing for the core account.

3. The method of claim 1, wherein a first control parameter associated with the first accounts payable financial product comprises a monetary limit set for the first accounts payable financial product.

4. The method of claim 3, wherein a transaction against the first accounts payable financial product is allowed only when an amount associated with the transaction is equal to the monetary limit set for the first accounts payable financial product.

5. The method of claim 3, wherein one or more transactions against the first accounts payable financial product are allowed when a sum associated with the one or more transaction is less than or equal to the monetary limit set for the first accounts payable financial product.

6. The method of claim 1, wherein a first control parameter associated with the first accounts payable financial product comprises restricting the card to a single use.

7. The method of claim 3, wherein no control parameters are associated with the first accounts payable financial product other than the first control parameter.

8. The method of claim 1, wherein the step of causing the first accounts payable financial product to be distributed comprises transmitting a virtual card electronically to the first recipient payee.

9. The method of claim 8, wherein the step of transmitting comprises causing a text message, an email, a FAX, a hypertext markup language (HTML) link, or a phone call to be transmitted to the first recipient payee.

10. The method of claim 1, wherein the first recipient payee is able to redeem the first accounts payable financial product for cash at an automated teller machine (ATM), a commercial bank branch location, a check-cashing location, through a credit card network or through a debit card network.

11. The method of claim 1, wherein a first control parameter associated with the first accounts payable financial product comprises an activation date or an expiration date for the first accounts payable financial product.

12. The method of claim 1, wherein a first control parameter associated with the first accounts payable financial product comprises a regional restriction that defines a geographic region throughout which the first accounts payable financial product can be redeemed.

13. The method of claim 1, wherein the first accounts payable financial product includes a card number having a bank identification number (BIN number) that is based on an account type associated with the core account.

14. The method of claim 13, wherein the core account comprises a checking account, a savings account, a home equity account, a money market account, a debit card account, a prepaid card account, a gift card account, a healthcare savings account, an educational savings account, a credit card account, an employee benefits account, a rewards account, a billing account, or a promotion fund account.

15. The method of claim 1, further comprising the steps of:
receiving a data file that includes a list of recipient payees that includes the first recipient payee, wherein one or more first accounts payable financial products is to be distributed to each recipient payee included in the list of recipient payees;
generating a plurality of accounts payable financial products that includes the first accounts payable financial product, wherein each accounts payable financial product included in the plurality of accounts payable financial products is structured with one or more control parameters that define use restrictions for the accounts payable financial product; and
causing one or more of the accounts payable financial products to be distributed to each recipient payee included in the list of recipient payees.
